# EUROPÄISCHE PATENTSCHRIFT

(11) **EP 3 746 328 B1**
(45) Veröffentlichungstag und Bekanntmachung des Hinweises auf die Patenterteilung: **10.08.2022**
(21) Anmeldenummer: 19703952.2
(22) Anmeldetag: 21.01.2019
(51) Int. Cl.: B60K 37/06, B60K 35/00, G06F 3/01, G06F 3/041

(54) **BEDIENEINHEIT FÜR EIN FAHRZEUG**
INPUT DEVICE FOR A VEHICLE
UNITÉ DE COMMANDE POUR UN VÉHICULE

(30) Priorität: 02.02.2018 DE 102018102401
(43) Veröffentlichungstag der Anmeldung: 09.12.2020
(73) Patentinhaber: Behr-Hella Thermocontrol GmbH, 59557 Lippstadt (DE)
(72) Erfinder: KEMPPINEN, Pasi, 33800 Tampere (FI); TEIKARI, Vesa, 33820 Tampere (FI)
(74) Vertreter: dompatent von Kreisler Selting Werner - Partnerschaft von Patent- und Rechtsanwälten mbB
(86) Internationale Anmeldenummer: PCT/EP2019/051369
(87) Internationale Veröffentlichungsnummer: WO 2019/149557

(56) Entgegenhaltungen:
- WO-A1-2011/138502
- WO-A1-2017/162586
- WO-A1-2018/141745

## Beschreibung

Die Erfindung betrifft eine Bedieneinheit für ein Fahrzeug mit haptischem Feedback.

Derartige Bedieneinheiten erfreuen sich zunehmender Beliebtheit und werden vorzugsweise in Fahrzeugen verbaut. Bei großen Displays bzw. Touchscreen tritt beim haptischen Feedback das Problem auf, dass die Bewegung des Touchscreens leider nicht gänzlich unbeeinflusst gegenüber der Fahrzeugumgebung der Bedieneinheit erfolgen kann.

Es ist daher bereits vorgeschlagen worden, gegenphasig zur mechanischen Anregung des Touchscreens ein Ausgleichs- bzw. Gegengewicht zu bewegen. Wenn also beispielsweise beim haptischen Feedback der Touchscreen lateral nach links bewegt wird, so wird zeitgleich ein Gegengewicht nach rechts bewegt, wobei die Verfahrwege beider entsprechend dem Verhältnis der Massen von Touchscreen und Gegengewicht gewählt sind (siehe z.B. DE-A-10 2008 046 102, WO-A-2017/162586 und WO-A-2011/138502).

Aufgabe der Erfindung ist es, diesbezüglich eine einfache mechanische und platzsparende Konstruktion anzugeben.

Zur Lösung dieser Aufgabe wird mit der Erfindung eine Bedieneinheit für ein Fahrzeug nach Anspruch vorgeschlagen, wobei die Bedieneinheit versehen ist mit
- einem Touchscreen,
- einem Aktuator zur mechanischen Anregung des Touchscreens bei Erkennung einer validen manuellen Betätigung des Touchscreen bei Eingabe eines Bedienbefehls und
- einem Gegengewicht,
- wobei der Aktuator als Antriebseinheit mit einem Stator und einem Translator ausgebildet ist, die sich bei Ansteuerung der Antriebseinheit ausgehend von einer Ruheposition in entgegengesetzten Richtungen entweder voneinander entfernen oder aufeinander zubewegen, und zwar bis in eine Endposition, und die sich bei Beendigung der Ansteuerung aus der Endposition insbesondere automatisch wieder zurück in die Ruheposition bewegen, und
- wobei der Stator mit dem Touchscreen und der Translator mit dem Gegengewicht oder umgekehrt gekoppelt ist.

Sinngemäß wird also mit der Erfindung vorgeschlagen, den Aktuator, bezogen auf den Kraftfluss, mechanisch zwischen Touchscreen und Gegengewicht anzuordnen. Der Aktuator weist einen Stator und einen Translator auf, wobei entweder der Stator mit dem Touchscreen und der Translator mit dem Gegengewicht oder umgekehrt verbunden ist. Insoweit weist also der Aktuator zwei sich bei Ansteuerung der Antriebseinheit bewegende Elemente, nämlich den Stator und den Translator auf. Beide Elemente treiben ein weiteres Element, nämlich einerseits den Touchscreen und andererseits das Gegengewicht an. Dies erfolgt gegenphasig, so dass es bei entsprechender Auslegung der Massen und Verfahrwege zu einer Kompensation der nach außen wirkenden Kräfte kommt.

Nach der Erfindung ist vorgesehen, dass mit dem Translator und mit dem Stator jeweils eine Koppelelementanordnung verbunden ist, wobei die eine Koppelelementanordnung mit dem Touchscreen und die andere Koppelelementanordnung mit dem Gegengewicht gekoppelt ist. Ferner ist das Gegengewicht hinter dem Touchscreen angeordnet, wobei der Aktuator hinter dem Gegengewicht und damit das Gegengewicht zwischen dem Touchscreen und dem Aktuator angeordnet ist und wobei das Gegengewicht eine Durchgangsöffnung aufweist, durch die hindurch sich die mit dem Touchscreen verbundene Koppelelementanordnung erstreckt.

In einer Ausprägung der Erfindung sind das Gegengewicht und der Aktuator (also Stator und Translator) unterschiedliche Entitäten, d.h. unterschiedliche Elemente.

In vorteilhafter Weiterbildung der Erfindung kann vorgesehen sein, dass die Antriebseinheit als Elektromagnet, insbesondere als Zuganker-Elektromagnet ausgebildet ist, wobei entweder der Stator oder der Translator eine Erregerspule aufweist, und dass derjenige Teil des Elektromagnets, der mit der Erregerspule versehen ist, mit dem Gegengewicht gekoppelt ist. Die mechanische Kopplung desjenigen Teils des Elektromagneten, der die Erregerspule aufweist, hat den Vorteil, dass dann dieser Teil des Elektromagneten zugleich auch als Gegengewicht aufgefasst werden kann.

Ferner kann es von Vorteil sein, wenn die Antriebseinheit als Tauchspulenantrieb mit Erregerspule ausgebildet ist, wobei derjenige Teil des Tauchspulenantriebs, der die Erregerspule aufweist, mit dem Gegengewicht gekoppelt ist.

Die erfindungsgemäße Bedieneinheit kann in einer weiteren Ausgestaltung ferner ein Halteelement aufweisen, an dem der Touchscreen und/oder das Gegengewicht gelagert ist bzw. sind, wobei entweder der Touchscreen oder das Gegengewicht oder beide an dem Halteelement federelastisch gelagert ist bzw. sind.

Letztendlich kann es auch von Vorteil sein, wenn sich die beiden Koppelelementanordnungen an dem Halteelement abstützen und insbesondere mit diesem gelenkig verbunden sind, so dass sie sich bei Aufbringung einer Aufschlagkraft auf den Touchscreen zur Absorption kinetischer Energie verformen.

Ein Ausführungsbeispiel der Erfindung wird nachfolgend unter Bezugnahme auf die Zeichnung näher beschrieben. Im Einzelnen zeigen:
- Fig. 1: eine Ansicht auf die Rückseite einer Bedieneinheit gemäß einem Ausführungsbeispiel der Erfindung,
- Fig. 2: eine Seitenansicht der Bedieneinheit nach Fig. 1 und
- Fig. 3: die Situation (in Seitenansicht), in der auf die Bedieneinheit eine Aufschlagkraft wirkt.

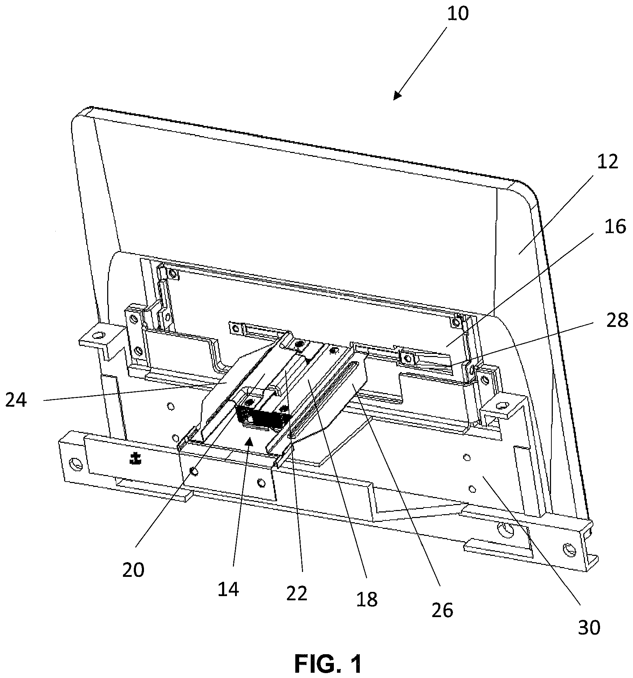

Fig. 1 zeigt die Rückseite einer Bedieneinheit 10, die einen Touchscreen 12 enthält, der von einem Aktuator pulsartig mechanisch anregbar ist, um bei einer Eingabe durch eine Person ein taktiles, haptisches Feedback zu erzeugen. Bei pulsartiger Anregung des Touchscreens 12 wird auch ein Gegengewicht 16 mechanisch angeregt, und zwar um 180° phasenverdreht zur mechanischen Anregung des Touchscreens. Der Aktuator weist einen Stator 18 und einen Translator 20 auf, die mit dem Gegengewicht 16 und dem Touchscreen 12 mechanisch gekoppelt sind. Die Ansteuerung des Aktuators erfolgt durch Bestromung einer Erregerspule 22. Die mechanische Kopplung erfolgt durch ein Koppelelement bzw. eine Koppelelementanordnung 24 und einer Koppelelementanordnung bzw. ein Koppelelement 26, wobei in diesem Ausführungsbeispiel das Koppelelement 24 der Kopplung zwischen Translator 20 und einem Halteelement 30 dient, während der Stator 18 mit dem Touchscreen 12 gekoppelt ist. Durch eine Durchgangsöffnung 28 im Halteelement 30 erfolgt die mechanische Verbindung zwischen Stator 18 und Touchscreen 12 über das Koppelelement 26.

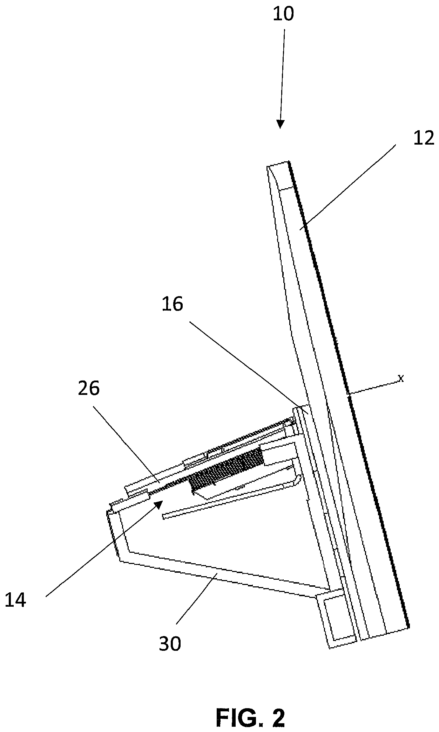

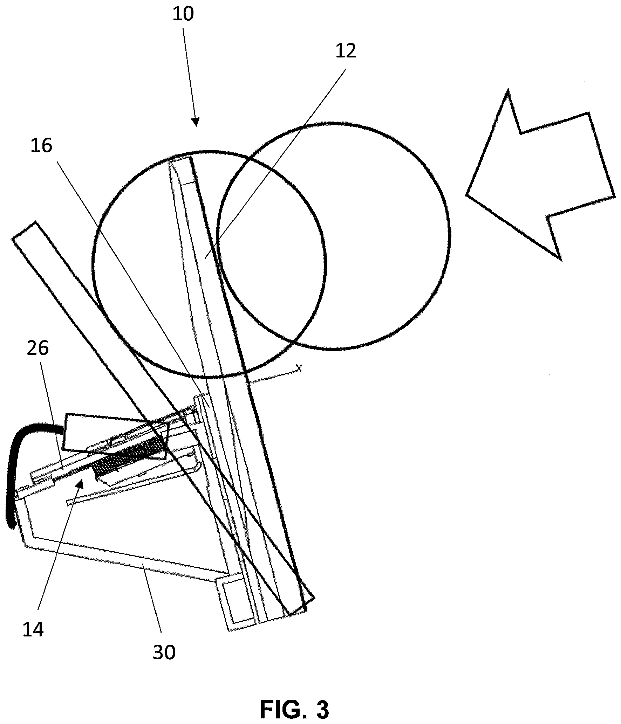

Fig. 2 zeigt eine Seitenansicht der Bedieneinheit nach Fig. 1, während Fig. 3 in Seitenansicht die Bedieneinheit bei Simulation eines Aufschlagstests zeigt.

### BEZUGSZEICHENLISTE

10 Bedieneinheit
12 Touchscreen
14 Aktuator
16 Gegengewicht
18 Stator
20 Translator
22 Erregerspule
24 Koppelelementanordnung
26 Koppelelementanordnung
28 Durchgangsöffnung
30 Halteelement

## Patentansprüche

1. Bedieneinheit für ein Fahrzeug, mit
- einem Touchscreen (12),
- einem Aktuator (14) zur mechanischen Anregung des Touchscreens (12) bei Erkennung einer validen manuellen Betätigung des Touchscreen (12) bei Eingabe eines Bedienbefehls und
- einem Gegengewicht (16),
- wobei der Aktuator (14) als Antriebseinheit mit einem Stator (18) und einem Translator (20) ausgebildet ist, die sich bei Ansteuerung der Antriebseinheit ausgehend von einer Ruheposition in entgegengesetzten Richtungen entweder voneinander entfernen oder aufeinander zubewegen, und zwar bis in eine Endposition, und die sich bei Beendigung der Ansteuerung aus der Endposition insbesondere automatisch wieder zurück in die Ruheposition bewegen und
- wobei der Stator (18) mit dem Touchscreen (12) und der Translator (20) mit dem Gegengewicht (16) oder umgekehrt gekoppelt ist,
- wobei mit dem Translator (20) und mit dem Stator (18) jeweils eine Koppelelementanordnung (24, 26) verbunden ist, wobei die eine Koppelelementanordnung (26) mit dem Touchscreen (12 und die andere Koppelelementanordnung (24) mit dem Gegengewicht (16) gekoppelt ist, wobei das Gegengewicht (16) hinter dem Touchscreen (12) angeordnet ist,
**dadurch gekennzeichnet,**
- **dass** der Aktuator (14) hinter dem Gegengewicht (16) und damit das Gegengewicht (16) zwischen dem Touchscreen (12) und dem Aktuator (14) angeordnet ist und dass das Gegengewicht (16) eine Durchgangsöffnung (28) aufweist, durch die hindurch sich die mit dem Touchscreen (12) verbundene Koppelelementanordnung (26) erstreckt.

2. Bedieneinheit nach Anspruch 1, **dadurch gekennzeichnet, dass** die Antriebseinheit als Elektromagnet, insbesondere als Zuganker-Elektromagnet ausgebildet ist, wobei entweder der Stator (18) oder der Translator (20) eine Erregerspule (22) aufweist, und dass derjenige Teil des Elektromagnets, der mit der Erregerspule (22) versehen ist, mit dem Gegengewicht (16) gekoppelt ist.

3. Bedieneinheit nach Anspruch 1, **dadurch gekennzeichnet, dass** die Antriebseinheit als Tauchspulenantrieb mit Erregerspule (22) ausgebildet ist und dass derjenige Teil des Tauchspulenantriebs, der die Erregerspule (22) aufweist, mit dem Gegengewicht (16) gekoppelt ist.

4. Bedieneinheit nach einem der Ansprüche 1 bis 3, **gekennzeichnet durch** ein Halteelement (30), an dem der Touchscreen (12) und/oder das Gegengewicht (16) gelagert ist bzw. sind, wobei entweder der Touchscreen (12) oder das Gegengewicht (16) oder beide an dem Halteelement (30) federelastisch gelagert ist bzw. sind.

5. Bedieneinheit nach Anspruch 4, **dadurch gekennzeichnet, dass** sich die beiden Koppelelementanordnungen (24, 26) an dem Halteelement (30) abstützen und insbesondere mit diesem beweglich verbunden sind und dass die Koppelelementanordnungen (24, 26) jeweils mindestens ein Verbindungselement aufweisen, dass sich bei Aufbringung einer Aufschlagkraft auf den Touchscreen (12) zur Absorption kinetischer Energie verformt.

## Claims

1. An operating unit for a vehicle, comprising
- a touchscreen (12),
- an actuator (14) for mechanically exciting the touchscreen (12) upon detection of a valid manual actuation of the touchscreen (12) when an operating command is input, and
- a counterweight (16),
- wherein the actuator (14) as a drive unit is configured with a stator (18) and a translator (20) which, upon actuation of the drive unit, move in opposite directions either away from each other or towards each other starting from a rest position, namely up to an end position, and which in particular automatically move back from the end position into the rest position when the actuation has been ended, and
- wherein the stator (18) is coupled to the touchscreen (12) and the translator (20) is coupled to the counterweight (16), or vice versa,
- wherein the translator (20) and the stator (18) each have connected thereto a coupling element assembly (24, 26), wherein the one coupling element assembly (26) is coupled to the touchscreen (12) and the other coupling element assembly (24) is coupled to the counterweight (16), wherein the counterweight (16) is arranged behind the touchscreen (12), **characterized in that**
- the actuator (14) is arranged behind the counterweight (16) and thus the counterweight (16) is arranged between the touchscreen (12) and the actuator (14), and that the counterweight (16) has a through-going opening (28) through which the coupling element assembly (26) connected to the touchscreen (12) extends.

2. The operating unit according to claim 1, **characterized in that** the drive unit is configured as an electromagnet, in particular an armature-type electromagnet, wherein either the stator (18) or the translator (20) comprises an excitation coil (22), and that that portion of the electromagnet which is provided with the excitation coil (22) is coupled to the counterweight (16).

3. The operating unit according to claim 1, **characterized in that** the drive unit is configured as a plunger-coil-type drive having an excitation coil (22), and that that portion of the plunger-coil-type drive which comprises the excitation coil (22) is coupled to the counterweight (16).

4. The operating unit according to any one of claims 1 to 3, **characterized by** a supporting element (30) on which the touchscreen (12) and/or the counterweight (16) is/are supported, wherein either the touchscreen (12) or the counterweight (16) or both is/are spring-elastically supported on the supporting element (30).

5. The operating unit according to claim 4, **characterized in that** the two coupling element assemblies (24, 26) rest upon the supporting element (30) and are in particular movably connected thereto, and that the coupling element assemblies (24, 26) each comprise at least one connecting element which is deformed when an impact force is applied to the touchscreen (12) for absorbing kinetic energy.

## Revendications

1. Unité de commande pour un véhicule, dotée
- d'un écran tactile (12),
- d'un actionneur (14) permettant une excitation mécanique de l'écran tactile (12) lorsqu'un actionnement manuel valide de l'écran tactile (12) est reconnu lors de la saisie d'une commande et
- d'un contrepoids (16),
- dans laquelle l'actionneur (14) est réalisé comme unité d'entraînement dotée d'un stator (18) et d'un translateur (20), lesquels ou bien s'éloignent ou bien se rapprochent l'un de l'autre dans des directions opposées à partir d'une position de repos lors de l'activation de l'unité d'entraînement, à savoir jusqu'à une position d'extrémité, et lesquels reviennent à la position de repos depuis la position d'extrémité, en particulier de manière automatique, lorsque l'activation prend fin et
- dans laquelle le stator (18) est couplé à l'écran tactile (12) et le translateur (20) est couplé au contrepoids (16), ou l'inverse,
- dans laquelle un agencement d'élément d'accouplement respectif (24, 26) est relié au translateur (20) et au stator (18), dans laquelle l'un agencement d'élément d'accouplement (26) est couplé à l'écran tactile (12) et l'autre agencement d'élément d'accouplement (24) est couplé au contrepoids (16), dans laquelle le contrepoids (16) est disposé derrière l'écran tactile (12),
**caractérisée**
- **en ce que** l'actionneur (14) est disposé derrière le contrepoids (16) et ainsi le contrepoids (16) est disposé entre l'écran tactile (12) et l'actionneur (14) et en ce que le contrepoids (16) comporte une ouverture de passage (28), à travers laquelle s'étend l'agencement d'élément d'accouplement (26) relié à l'écran tactile (12).

2. Unité de commande selon la revendication 1, **caractérisée en ce que** l'unité d'entraînement est réalisée sous forme d'électroaimant, en particulier comme électroaimant à armature de traction, dans laquelle soit le stator (18) soit le translateur (20) comporte une bobine excitatrice (22), et **en ce que** la partie de l'électroaimant pourvue de la bobine excitatrice (22) est couplée au contrepoids (16).

3. Unité de commande selon la revendication 1, **caractérisée en ce que** l'unité d'entraînement est réalisée comme entraînement à bobine mobile doté d'une bobine excitatrice (22) et **en ce que** la partie de l'entraînement à bobine mobile comportant la bobine excitatrice (22) est couplée au contrepoids (16).

4. Unité de commande selon l'une des revendications 1 à 3, **caractérisée par** un élément de maintien (30) sur lequel sont montés l'écran tactile (12) et/ou le contrepoids (16), dans laquelle soit l'écran tactile (12) soit le contrepoids (16) ou les deux sont montés élastiquement sur l'élément de maintien (30).

5. Unité de commande selon la revendication 4, **caractérisée en ce que** les deux agencements d'élément d'accouplement (24, 26) s'appuient sur l'élément de maintien (30) et sont en particulier reliés de manière mobile et **en ce que** les agencements d'élément d'accouplement (24, 26) comportent respectivement au moins un élément de liaison, lequel se déforme lors de l'application d'une force d'impact sur l'écran tactile (12) afin d'absorber l'énergie cinétique.
